Europäisches Patentamt

European Patent Office

Office européen des brevets

(19)

(11) Veröffentlichungsnummer: **0 338 314**

**A1**

# (12) EUROPÄISCHE PATENTANMELDUNG

(21) Anmeldenummer: 89105847.1

(22) Anmeldetag: 04.04.89

(51) Int. Cl.⁴: **B05B 15/12 , B05C 11/10 , B01D 46/04**

(30) Priorität: 20.04.88 DE 3813259

(43) Veröffentlichungstag der Anmeldung:
25.10.89 Patentblatt 89/43

(84) Benannte Vertragsstaaten:
**AT BE CH DE ES FR GB GR IT LI LU NL SE**

(71) Anmelder: **NORDSON CORPORATION**
**28601 Clemens Road**
**Westlake Ohio 44145-1148(US)**

(72) Erfinder: **De Veer, André**
**Balgheimenstrasse 67a**
**D-4047 Dormagen/Delrath(DE)**
Erfinder: **Grund, Jürgen**
**Hesselnberg 38**
**D-5600 Wuppertal 11(DE)**
Erfinder: **Weidauer, Uwe**
**Lacher Strasse 9**
**D-5650 Solingen 1(DE)**

(74) Vertreter: **Eisenführ & Speiser**
**Martinistrasse 24**
**D-2800 Bremen 1(DE)**

(54) **Pulver-Rückgewinnungseinrichtung für Pulverbeschichtungsanlagen oder dergleichen.**

(57) Beschrieben wird eine Pulver-Rückgewinnungseinrichtung für Pulverbeschichtungsanlagen oder dergleichen mit einer Einrichtung zum Reinigen der Filter (30, 31), bei der mit Pulverpartikeln beladenes Gas aus einem Raum höheren Druckes (Zuluftraum) (28) durch Filterelemente (30, 31) hindurch in eine Kammer niedrigeren Druckes (Reinluftkammer) (42) strömt und die Pulverpartikel in den äußeren Bereichen der Filterelemente (30, 31) zurückläßt, bei der jedes Filterelement (30, 31) von einem Hohlkörper (34) gebildet ist und eine das Innere des Hohlkörpers (34) mit der Reinluftkammer (42) verbindende Öffnung aufweist, durch die das das Filterelement (30, 31) durchströmende Gas in die Reinluftkammer (42) gelangt,
und bei der in der Reinluftkammer (42) jedem Filterelement (30, 31) eine Ausblasdüse (64) zugeordnet ist, deren Einlaß über ein Ventil (66) an eine Druckgasquelle angeschlossen und deren Auslaß so gerichtet ist, daß das ihr entströmende Gas unter erhöhtem Druck durch die Öffnung in den Innenraum

(34) des zugeordneten Filterelementes (30, 31) und durch dessen Filtermaterial hindurch in den Zuluftraum (28) gelangt und dadurch die äußeren Bereiche des Filterelements (30, 31) reinigt. Vom Einlaß (73) jeder Ausblasdüse (64) führen zu deren Auslaß (74) mehrere Düsenkanäle (82), und mit bezug auf jede Achse (83), die jeweils eine Ausblasdüse (64) und den Hohlraum (34) des zugeordneten Filterelementes (30, 31) etwa zentral durchsetzt sind/ist entweder die Mittelachsen (83) der jeweiligen Düsenkanäle (82) und/oder die umlaufende Innenfläche (36) des jeweiligen Hohlraumes (34) derart geneigt, daß die aus den Düsenkanälen (82) jeder Ausblasdüse (64) austretenden Gasstrahlen unter einem spitzen Winkel auf die Innenfläche des zugeordneten Filterelementes (30, 31) auftreffen.

Fig. 2

## Pulver-Rückgewinnungseinrichtung für Pulverbeschichtungsanlagen oder dergleichen

Die Erfindung betrifft eine Pulver-Rückgewinnungseinrichtung für Pulverbeschichtungsanlagen oder dergleichen mit einer Einrichtung zum Reinigen der Filter, bei der mit Pulverpartikeln beladenes Gas aus einem Raum höheren Druckes (Zuluftraum) durch Filterelemente hindurch in eine Kammer niedrigeren Druckes (Reinluftkammer) strömt und die Pulverpartikel in den äußeren Bereichen der Filterelemente zurückläßt, bei der jedes Filterelement von einem Hohlkörper gebildet ist und eine das Innere des Hohlkörpers mit der Reinluftkammer verbindende Öffnung aufweist, durch die das das Filterelement durchströmende Gas in die Reinluftkammer gelangt,
und bei der in der Reinluftkammer jedem Filterelement eine Ausblasdüse zugeordnet ist, deren Einlaß über ein Ventil an eine Druckgasquelle angeschlossen und deren Auslaß so gerichtet ist, daß das ihr entströmende Gas unter erhöhtem Druck durch die Öffnung in den Innenraum des zugeordneten Filterelementes und durch dessen Filtermaterial hindurch in den Zuluftraum gelangt und dadurch die äußeren Bereiche des Filterelements reinigt. Eine solche Einrichtung ist beispielsweise aus der DE-PS 29 76 436 bekannt.

Bei der Beschichtung von Gegenständen mit Schutz-oder Farbschichten bedient man sich unter anderem sogenannter Pulverbeschichtungsverfahren, bei denen in einer möglichst abgeschlossenen Kabine ein pulverförmiges Kunstharz auf ein Substrat gesprüht wird, welches sich an dem Substrat anlagert und bei einer anschließenden Erwärmung des Substrates schmilzt. Nach einer Abkühlungsphase ist das Substrat mit der gewünschten Schutz- oder Farbschicht überzogen.

Von dem in Richtung auf das Substrat gesprühten Pulver erreicht nur ein mehr oder weniger großer Teil die Oberfläche des Substrates. Ein nicht unerheblicher Teil der Pulverpartikel fliegt jedoch am Substrat vorbei.

Aus vielen Gründen ist es notwendig, daß man die überschüssigen Pulvermengen zurückgewinnt. Zu diesem Zweck ist üblicherweise vorgesehen, daß innerhalb von Beschichtungskabinen ein Unterdruck herrscht. Erzeugt wird dieser Unterdruck mit Hilfe eines Gebläses, dessen Saugseite an den Innenraum der Beschichtungskabine angeschlossen ist und Luft durch die üblicherweise vorhandenen Beschickungsöffnungen der Kabine ansaugt. Der auf diese Weise innerhalb der Kammer herrschende Luftstrom nimmt einen großen Teil der überschüssigen Pulverpartikel mit; der Rest der Partikel setzt sich an den Wänden und am Boden der Kabine ab und muß von Zeit zu Zeit mechanisch entfernt werden.

Der mit den überschüssigen Pulverpartikeln beladene Luftstrom wird durch die eingangs bereits angesprochenen Filterelemente hindurchgeführt. Die Pulverpartikel lagern sich auf der Oberfläche der Filterelemente ab und verbleiben auf diese Weise innerhalb der Kabine. Bei der noch zu beschreibenden Reinigung der Filterelemente fallen die Partikel auf den Boden der Kabine in einen hierfür vorgesehenen und üblicherweise trichterförmigen Bereich, aus dem sie vergleichsweise leicht abgezogen werden können.

Es sind viele Ausgestaltungen für die Filter in den hier interessierenden Anlagen bekannt. Bei den Filterelementen der Einrichtung nach der einleitend zi tierten Druckschrift handelt es sich um etwa rohrförmig gestaltete Filterpatronen, deren Boden verschlossen ist, deren umlaufende Wand von Filtermaterial gebildet ist und die oben offen sind. Innen- und Außenwände dieser Filterpatronen verlaufen parallel zueinander und koaxial zu einer Mittelachse der Patrone.

In der bekannten Pulver-Rückgewinnungsanlage sind die Filterpatronen innerhalb eines Zuluftraumes so aufgestellt, daß sie mit ihrer Öffnung an einer etwa horizontal liegenden Trennwand anliegen, die den Zuluftraum von der Reinluftkammer abtrennt. Die Querwand hat für jedes Filterelement einen Durchbruch. Oberhalb der Querwand befindet sich fluchtend zu jeweils einem Durchbruch eine Ausblasdüse, durch die in der einleitend beschriebenen Weise ein Luftstrahl abgegeben werden kann, der durch den erwähnten Durchbruch hindurch in das Innere der Filterpatronen gelangt, deren Umfangswand durchsetzt und beim Austreten aus dem Filtermaterial die dort anhaftenden Pulverpartikel ablöst und in den Zuluftraum zurückbefördert. Auf diese Weise wird die Lebensdauer der Filterpatronen erheblich verlängert, denn die erzielte Reinigungswirkung ist recht gut.

Gleichwohl war man mit der Reinigungswirkung im Verhältnis zu dem großen Bedarf an hochkomprimierter Druckluft noch nicht zufrieden.

Der Erfindung lag deshalb die Aufgabe zugrunde, eine Einrichtung der eingangs genannten Art so weiterzubilden, daß die Reinigungswirkung weiter verbessert wird.

Die erfindungsgemäße Lösung dieser Aufgabe besteht darin, daß man eine Pulver-Rückgewinnungseinrichtung mit den eingangs genannten Merkmalen so ausbildet, daß vom Einlaß jeder Ausblasdüse zu deren Auslaß mehrere Düsenkanäle führen,
und daß mit bezug auf jede Achse, die jeweils eine Ausblasdüse und den Hohlraum des zugeordneten Filterelementes etwa zentral durchsetzt

entweder die Mittelachsen der jeweiligen Düsenkanäle und/oder die umlaufende Innenfläche des jeweiligen Hohlraumes derart geneigt sind/ist, daß die aus den Düsenkanälen jeder Ausblasdüse austretenden Gasstrahlen unter einem spitzen Winkel auf die Innenfläche des zugeordneten Filterelementes auftreffen.

Üblicherweise wird man die bisherigen zylindrischen Filterpatronen auch weiterhin einsetzen, deren Innenfläche koaxial zur Längsachse der Filterpatronen verlaufen. Bei in Verlängerung dieser Achse angeordneter Ausblasdüse ist dann vorteilhafterweise vorgesehen, daß die Achsen der Düsenkanäle auf der Mantelfläche eines Kegels liegen, dessen Spitze dem stromaufwärtigen Ende der Ausblasdüse zugekehrt ist.

Weitere vorteilhafte Ausgestaltungen der Erfindung sind in den Unteransprüchen angegeben.

Es wurde überraschend gefunden, daß die Reinigungswirkung durch die erfindungsgemäße Lösung deutlich verbessert wird, ohne daß es einer Vergrößerung der Luftmenge bedarf. Tatsächlich kann sogar der Druck der für die Filterreinigung eingesetzten Luft gegenüber dem Stand der Technik verringert werden.

Darüber hinaus hat es sich als sehr vorteilhaft herausgestellt, daß die erfindungsgemäße Lösung zu einer deutlichen Reduktion des Geräuschpegels während der Reinigung führt.

Die Erfindung ist nachstehend anhand des in der Zeichnung beschriebenen Ausführungsbeispiels näher erläutert. Es zeigen:

Fig. 1 eine schematische Darstellung einer Pulver-Rückgewinnungseinrichtung an einer Pulverbeschichtungsanlage;

Fig. 2 in verkleinertem Maßstab eine schematische, teilgeschnittene Ansicht von Ausblasdüse und zugeordnetem Filterelement;

Fig. 3 einen Schnitt durch eine komplette Ausblasdüse etwa im Maßstab 1:1;

Fig. 4 einen Vertikalschnitt durch einen Düseneinsatz und

Fig. 5 eine Ansicht auf den Düseneinsatz von der Austrittsseite seiner Düsenkanäle.

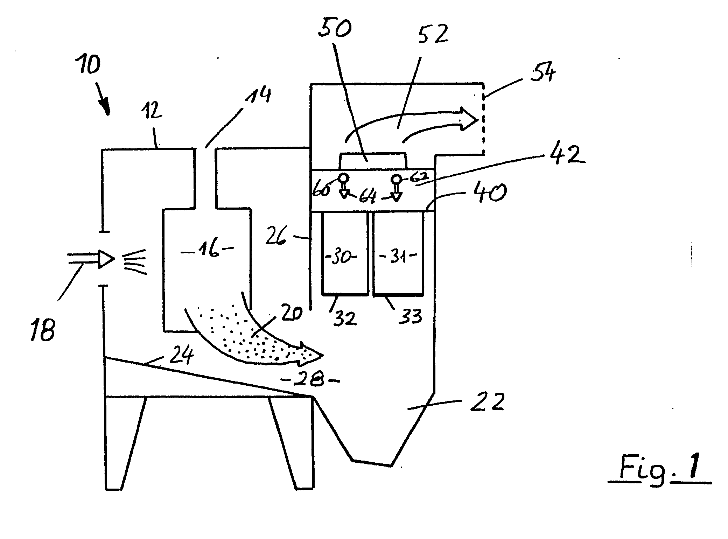

In Fig. 1 ist eine übliche Beschichtgungskabine 10 schematisch im Schnitt dargestellt, bei der ein nicht gezeigtes Substrat an einer Förderkette hängend durch eine im Dach 12 der Kabine befindliche Beschickungsöffnung 14 sowie durch in den Stirnwänden der Kabine befindliche seitliche Beschickungsöffnungen 16 hindurchgefördert wird. Während des Passierens der Kabine 10 wird eine Sprüheinrichtung 18 betätigt, die Kunstharzpulver in Richtung auf das Substrat ausstößt, so daß dieses von dem Pulver bedeckt wird und nach dem Passieren der Kabine erwärmt werden kann, wodurch das Kunstharzpulver auf der Oberfläche des Substrates schmelzt und den gewünschten Überzug bildet.

Alles an dem Substrat innerhalb der Beschichtungskabine 10 vorbeigesprühte Pulver wird von einem Luftstrom 20 mitgenommen, welcher von einem Gebläse 50 erzeugt und aufrechterhalten wird. Das Gebläse 50 saugt durch die Beschickungsöffnungen hindurch Luft in das Innere der Kabine hinein. Hierdurch wird einerseits verhindert, daß Pulverpartikel unmittelbar in die Umgebung gelangen können. Zum anderen wird erreicht, daß die überschüssige Pulvermenge von dem Luftstrom mitgenommen wird und in einen Rückgewinnungsabschnitt 22 der Kabine 10 gelangt. Unterstützt wird das Verbringen überschüssiger Pulverpartikel in den Rückgewinnungsabschnitt durch einen schräg verlaufenden Boden 24 der Kabine 10 und durch eine Prallwand 26, welche sich gegenüber der Sprüheinrichtung 18 befindet und aufprallendes Pulver nach unten in Richtung auf den Luftstrom 20 umleitet. Der bisher beschriebene Innenraum der Beschichtungskabine 10 wird anderweitig auch pauschal als Zuluftraum 28 bezeichnet.

Wie Fig. 1 erkennen läßt, wird der Luftstrom 20 im Rückgewinnungsabschnitt 22 nach oben umgelenkt und durchströmt von radial außen nach innen eine Reihe von paarweise angeordneten, patronenförmigen Filterelementen 30, 31. Die Anzahl der tatsächlich vorhandenen Paare von Filterelementen 30, 31 ist für die vorliegende Beschreibung ohne Bedeutung.

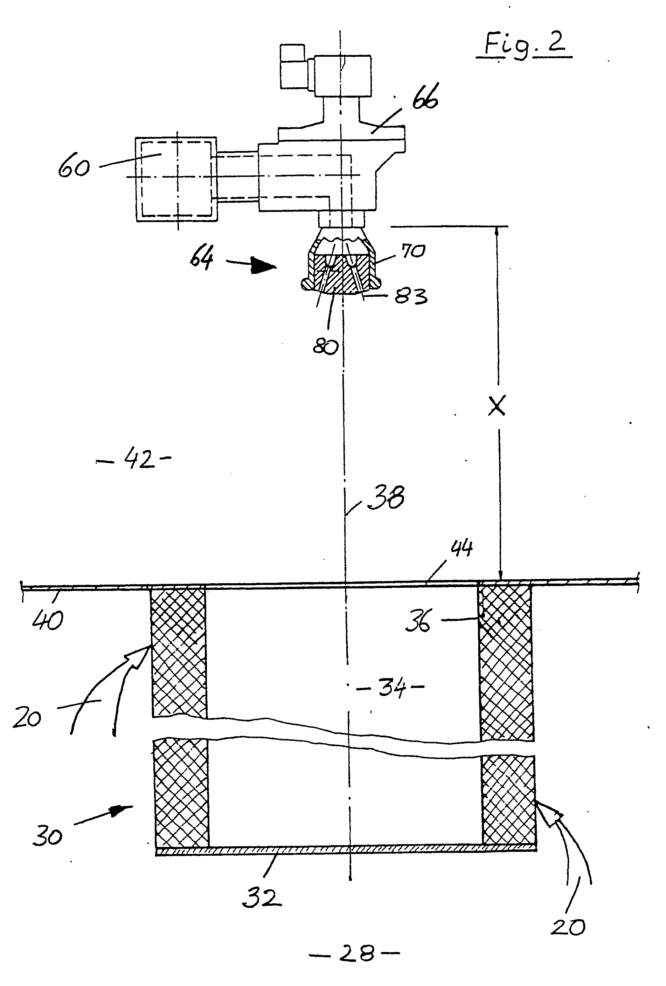

Die Filterelemente 30, 31 haben einen geschlossenen Boden 32, 33 und bestehen im übrigen aus einem rohrförmigen Abschnitt eines Filtermaterials, wie zum Beispiel zickzackförmig in einer oder mehreren Lagen angeordnetem Filterpapier. Fig. 2 läßt den Aufbau eines solchen Filterelementes deutlich werden und auch den Umstand, daß jedes Filterelement einen Hohlraum 34 aufweist, der von einer Innenwand 36 des rohrförmigen Filterkörpers in radialer Richtung begrenzt wird.

Die Filterelemente 30, 31 sind mit ihrer oben offenen Stirnseite abgedichtet an eine querverlaufende Trennwand 40 angesetzt, die den Zuluftraum 28 von einer in Strömungsrichtung jenseits der Filterelemente und jenseits der Trennwand 40 befindlichen Reinluftkammer 42 trennt. Im Bereich jedes Filterelementes weist die Trennwand 40 einen Durchbruch 44 auf, dessen Durchmesser mit Vorteil dieselbe Größe hat wie der Durchmesser des Hohlraums 34 der im Ausführungsbeispiel zylindrischen Filterelemente.

Bei der Umlenkung des Luftstromes 20 aus der in Fig. 1 gezeigten Richtung in die in Fig. 2 dargestellte Richtung wird ein erheblicher Teil der Pulverpartikel aufgrund seiner Masse aus der strömenden Luft herausgeschleudert und nach unten auf den trichterförmigen Boden des Rückgewinnungsabschnittes 22 sinken, von wo das Pulver in herkömmlicherweise mittels einer Pumpe oder dergleichen abgezogen werden kann. Ein restlicher Teil des Pulvers setzt sich jedoch auf der Außenseite der Filterelemente 30, 31 ab, so daß die von dem Gebläse 50 aus der Reinluftkammer 42 abgesaugte Luft weitgehend frei von Pulverbestandteilen ist. Gemäß Fig. 1 wird die Luft vom Gebläse 50 in der mit Pfeil 52 angedeuteten Weise zu einem Auslaß 54 gefördert, an den sich üblicherweise noch ein auswechselbares Nachfilter anschließt.

In der Reinluftkammer 42 befinden sich gemäß Fig. 1 oberhalb der beiden Reihen von Filterelementen 30, 31 zwei parallellaufende Druckluftkanäle 60, 62 mit nach unten gerichteten Ausblasdüsen 64. Je Filterelement 30, 31 ist in der Druckluftleitung 60 bzw. 62 eine Ausblasdüse 64 vorgesehen, sie befindet sich zentral oberhalb jeweils eines Filterelementes und ist auf den Hohlraum 34 "ihres" Filterelementes gerichtet. Die Druckluftleitungen führen hochkomprimierte Druckluft von einer Druckluftquelle zu den Ausblasdüsen 64. Mit Hilfe von Ventilen 66 (vergleiche Fig. 2) wird Druckluft impulsartig in den Innenraum der Filterelemente gerichtet. Die Druckluft strömt im Gegenstrom von innen nach außen durch die Filterelemente hindurch, löst außen die dort anhaftenden Pulverpartikel ab und fördert sie nach unten zum Boden des Rückgewinnungsabschnittes 22.

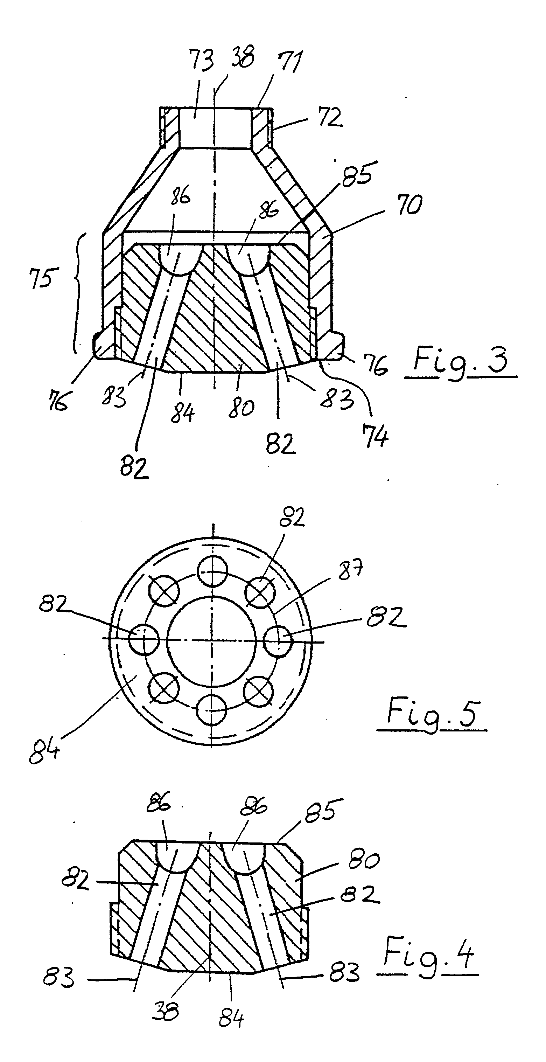

Die Ausblasdüse 64 besteht ausweislich der Fig. 2 und 3 aus zwei Teilen, nämlich aus einer Trägerglocke 70 und einem Düseneinsatz 80. Die Trägerglocke 70 weist an ihrem stromaufwärts gelegenen einen Ende 71 ein Außengewinde 72 sowie eine Einströmöffnung 73 auf. Mit dem Gewinde 72 ist die Trägerglocke 70 in ein Innengewinde am Ausgang des Ventils 66 eingeschraubt. Fig. 2 läßt erkennen, daß die Einschraubachse der Ausblasdüse 64 bzw. der Trägerglocke 70 dieselbe ist, wie die Längsachse 38 des zugeordneten Filterelementes 30.

Von ihrem einen Ende 71 aus erweitert sich die Trägerglocke 70 nach einem kurzen Stück stark und setzt sich dann zu ihrem Ausströmende 74 hin mittels eines zylindrischen Abschnittes 75 fort. Letzterer weist ein Innengewinde 76 auf, in das der mit Außengewinde versehene Düseneinsatz 80 eingeschraubt ist. Knaggen 76 oder Schlüsselflächen am Außenumfang der Trägerglocke 70 erlauben es, die Trägerglocke fest in das Ventil 66 einzuschrauben bzw. festzuhalten während des Einschraubens des Düseneinsatzes 80.

Die vom Ventil 66 in herkömmlicherweise in kurzen Impulsen von beispielsweise 1/10 Sekunde zuströmende Druckluft verlangsamt ihre Geschwindigkeit etwas in dem sich erweiternden Teil der Trägerglocke und trifft dann auf die innenliegende Stirnfläche 85 des Düseneinsatzes 80 auf. Der Düseneinsatz ist im Ausführungsbeispiel mit acht Düsenkanälen 82 in Form von Bohrungen ausgerüstet. Die Fig. 3 und 4 lassen deutlich erkennen, daß die Längsachsen 83 dieser Bohrungen schräg von innen nach außen gerichtet verlaufen und zur Längsachse 38 unter einem spitzen Winkel von unter 20° ausgerichtet sind. Alle diese Längsachsen 83 kann man sich auf der Mantelfläche eines gemeinsamen Kegels liegend vorstellen, dessen Spitze im Bereich des einen Endes 71 der Ausblasdüse 64 liegt. Die die Ausblasdüse 64 verlassende Luft ist somit in acht diskrete Strahlen aufgeteilt, welche sich kegelförmig von der Ausblasdüse 64 weg in den Hohlraum 34 des darunter befindlichen Filterelementes bewegen. Bei Verwendung des spitzen Winkels der Düsenkanäle 82 relativ zur Längsachse 38 werden die Luftstrahlen bei der Anordnung gemäß Fig. 2 und dem dort dargestellten relativen Abstand X der Ausblasdüse 64 von der Trennwand 40 die Innenwand 36 "ihres" Filterelementes an acht diskreten Stellen unter demselben spitzen Winkel treffen, wie er im Bereich der Ausblasdüse 64 vorhanden ist. Mit dem Maß X wird dabei eingestellt, an welcher axialen Stelle der Auftreffpunkt liegen soll. Eine relative Lage gemäß Fig. 2 hat sich als sehr wirksam gezeigt.

Das Aufteilen des beim Stand der Technik einzigen und entlang der Längsachse 38 gerichteten Luftstrahls in eine Vielzahl von Einzelstrahlen sowie die vorgesehene Disparallelität der einzelnen Luftstrahlen erbringt den angestrebten Erfolg einer gegenüber dem Stand der Technik deutlich erhöhten Reinigungswirkung der Filterelemente.

Zu dem Düseneinsatz 80 ist noch zu ergänzen, daß sich seine Außenfläche 84 aus einem zentralen Abschnitt mit rechtwinkliger Ausrichtung zur Achse 38 und aus einem geneigten Abschnitt zusammensetzt, welche senkrecht von den Längsachsen 83 der Düsenkanäle durchsetzt wird.

Die stirnseitige Innenfläche 85 des Düseneinsatzes 80 verläuft im wesentlichen senkrecht zur Längsachse 38. Im Bereich der dort befindlichen Enden der Düsenkanäle 82 gehen von der Innenfläche 85 etwa halbkugelförmige Einsenkungen 86 aus, in die die Düsenkanäle 82 von außen kommend münden.

Fig. 5 zeigt schließlich, daß die Düsenkanäle 82 zumindest im Bereich ihres Austrittes untereinander gleiche Abstände haben; ihre Längsachsen 83 durchsetzen einen gemeinsamen Teilkreis 87.

Nicht dargestellt ist, daß die Anzahl der Düsenkanäle 82 insbesondere vergrößert werden kann und daß man mit Vorteil auch Gruppen von Düsenkanälen mit unterschiedlich großer Neigung zur Längsachse 38 vorsehen kann. Durch diese Maßnahmen läßt sich insbesondere bei axial langen Filtern erreichen, daß auch weiter entfernt liegende Bereiche der Filterelemente noch optimal gereinigt werden können.

Nicht dargestellt ist schließlich eine Variante mit nach Art eines Kegels geformter Innenwand jedes Filterelementes, wobei die Spitze dieses Kegels von der Ausblasdüse 64 wegweist. Bei einer solchen Anordnung kann man die Schrägstellung der Düsenkanäle verringern oder sogar aufgeben, ohne das erreichte Reinigungsziel zu beeinträchtigen, weil die Luftstrahlen weiterhin spitzwinklig auf die Innenwand auftreffen.

**Ansprüche**

1. Pulver-Rückgewinnungseinrichtung für Pulverbeschichtungsanlagen oder dergleichen mit einer Einrichtung zum Reinigen der Filter,
bei der mit Pulverpartikeln beladenes Gas aus einem Raum höheren Druckes (Zuluftraum) durch Filterelemente hindurch in eine Kammer niedrigeren Druckes (Reinluftkammer) strömt und die Pulverpartikel in den äußeren Bereichen der Filterelemente zurückläßt, bei der jedes Filterelement von einem Hohlkörper gebildet ist und eine das Innere des Hohlkörpers mit der Reinluftkammer verbindende Öffnung aufweist, durch die das das Filterelement durchströmende Gas in die Reinluftkammer gelangt,
und bei der in der Reinluftkammer jedem Filterelement eine Ausblasdüse zugeordnet ist, deren Einlaß über ein Ventil an eine Druckgasquelle angeschlossen und deren Auslaß so gerichtet ist, daß das ihr entströmende Gas unter erhöhtem Druck durch die Öffnung in den Innenraum des zugeordneten Filterelementes und durch dessen Filtermaterial hindurch in den Zuluftraum gelangt und dadurch die äußeren Bereiche des Filterelements reinigt,
dadurch gekennzeichnet, daß vom Einlaß (71) jeder Ausblasdüse (64) zu deren Auslaß (84) mehrere Düsenkanäle (82) führen,
und daß mit bezug auf jede Achse (38), die jeweils eine Ausblasdüse und den Hohlraum (34) des zugeordneten Filterelementes (30, 31) etwa zentral durchsetzt entweder die Mittelachsen (83) der jeweiligen Düsenkanäle (82)
und/oder die umlaufende Innenfläche (36) des jeweiligen Hohlraumes derart geneigt sind/ist,
daß die aus den Düsenkanälen jeder Ausblasdüse austretenden Gasstrahlen unter einem spitzen Winkel auf die Innenfläche des zugeordneten Filterelementes auftreffen.

2. Einrichtung nach Anspruch 1,
dadurch gekennzeichnet, daß die Ausblasdüse (64) eine Trägerglocke (70) aufweist, die mit einem Ende (71) in einen Zuluftkanal (60), den Ausgangsbereich eines Ventils (66) oder dergleichen einsetzbar ist und in deren anderem Ende (75) ein Düseneinsatz (80) festlegbar ist, der seinerseits die Düsenkanäle (82) enthält.

3. Einrichtung nach Anspruch 1 oder 2,
dadurch gekennzeichnet, daß die dem Filterelement (30, 31) zugekehrten Auslässe der Düsenkanäle (82) auf einem gemeinsamen Kreis (87) liegen.

4. Einrichtung mindestens nach Anspruch 3,
dadurch gekennzeichnet, daß alle Abstände benachbarter Düsenkanäle mindestens im Bereich der Auslässe untereinander gleich sind.

5. Einrichtung nach einem der Ansprüche 2 bis 4,
dadurch gekennzeichnet, daß der Düseneinsatz (80) in die Trägerglocke (70) einschraubbar ist.

6. Einrichtung nach mindestens einem der Ansprüche 1 bis 5,
dadurch gekennzeichnet, daß die Achsen (83) der Düsenkanäle (82) auf der Mantelfläche eines Kegels liegen, dessen Spitze dem einen Ende (71) der Trägerglocke (70) zugekehrt ist.

7. Einrichtung nach Anspruch 6,
dadurch gekennzeichnet, daß der Kegelwinkel eine Größe von etwa 35° hat.

Fig. 1

EP 0 338 314 A1

Fig. 2

*Fig.3*

*Fig.5*

*Fig.4*

# EUROPÄISCHER RECHERCHENBERICHT

**Europäisches Patentamt**

| | EINSCHLÄGIGE DOKUMENTE | | EP 89105847.1 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - C2 - 2 946 436<br>(NORDSON CORP.)<br>* Patentansprüche; Fig. 2 *<br>-- | 1 | B 05 B 15/12<br>B 05 C 11/10<br>B 01 D 46/04 |
| Y | DE - B - 2 121 276<br>(BAUMGARTEN)<br>* Gesamt *<br>-- | 1 | |
| A | EP - A2 - 0 244 066<br>(NORDSON CORP.)<br>* Zusammenfassung; Fig. 4 *<br>-- | 1 | |
| A | DE - A1 - 2 640 219<br>(GEMA AG)<br>* Patentansprüche *<br>-- | 1 | |
| A | AT - B - 356 073<br>(INTENSIV FILTER GMBH)<br>* Gesamt *<br>---- | 1 | |

| RECHERCHIERTE SACHGEBIETE (Int. Cl.4) |
|---|
| B 05 B<br>B 05 C<br>B 01 D |

Der vorliegende Recherchenbericht wurde für alle Patentansprüche erstellt.

| Recherchenort | Abschlußdatum der Recherche | Prüfer |
|---|---|---|
| WIEN | 13-06-1989 | SCHÜTZ |